# EUROPEAN PATENT APPLICATION

(11) **EP 2 053 455 A1**
(43) Date of publication of application: **29.04.2009**
(21) Application number: 08161382.0
(22) Date of filing: 29.07.2008
(51) Int. Cl.: G02F 1/13357, G02F 1/1335

(54) **Double sided liquid crystal display apparatus and portable phone incorporating the same**

(30) Priority: 25.10.2007 JP 2007277506
(71) Applicant: Fujitsu Ltd., Kawasaki-shi, Kanagawa 211-8588 (JP)
(72) Inventor: Mitamura, Fumio, Kanagawa 211-8588 (JP)
(74) Representative: Wilding, Frances Ward

(57) **Abstract**

A liquid crystal display apparatus (50,51) of a portable phone comprises a front polarizer (501), a liquid crystal (502), a rear polarizer (503), a rear reflector (504), a front display backlight guide (505), a front display light source (506), constructed from a LED, a liquid crystal driver (507), a rear display backlight guide (508), and a rear display light source (509). The rear reflector (504) is not disposed in the sub display area, but only in the main display area. F indicates the light emitting direction of the main display, and R indicates the light emitting direction of the sub display. The thickness and weight of the entire construction can be reduced, compared to a portable phone with two liquid crystal panels mounted back to back.

## Description

### CROSS-REFERENCE TO RELATED APPLICATION

This application claims priority from, and incorporates by reference the entire disclosure of, Japanese Patent Application No. 2007-277506, filed on October 25, 2007.

### BACKGROUND OF THE INVENTION

### 1. Field of the Invention

The present invention relates to a liquid crystal display apparatus and a portable phone incorporating the same, and more specifically to a liquid crystal display apparatus for use in a portable terminal and having a main display screen on the front side and a sub display screen on the rear side of a single liquid crystal panel, and a portable phone incorporating such a liquid crystal display apparatus.

### 2. Description of the Related Art

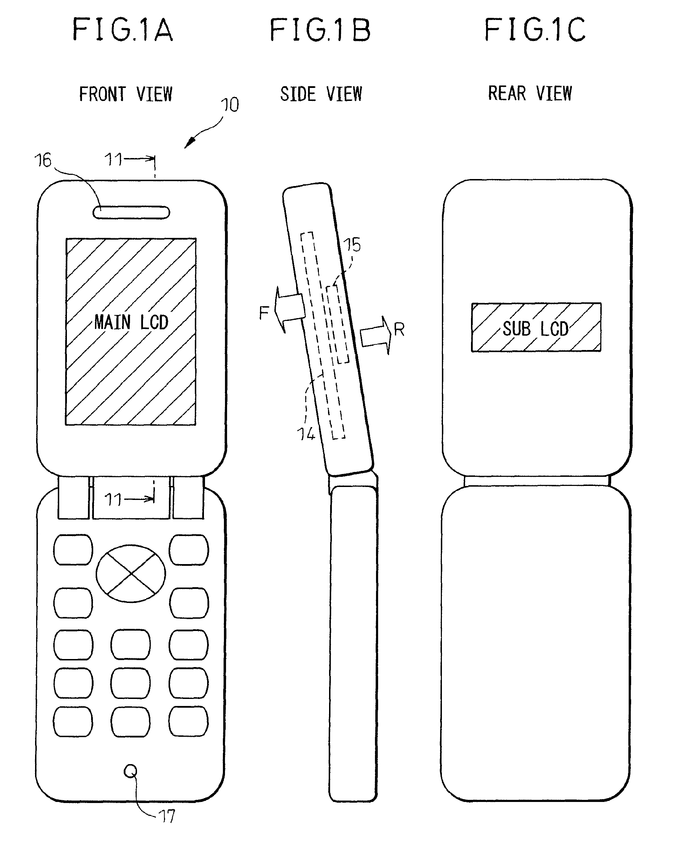

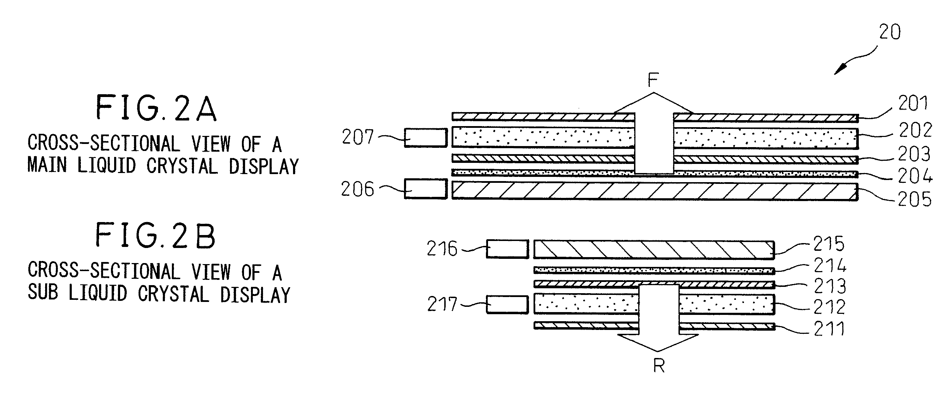

Figure 1 (Fig. 1A to Fig. 1C) is a diagram showing a portable phone mounted with a liquid crystal display apparatus according to the prior art, in which Fig. 1A shows a front view, Fig. 1B shows a side view, and Fig. 1C shows a rear view, and Figure 2 is a cross-sectional view taken along line 11-11 in Fig. 1A, in which Fig. 2A shows a cross-sectional view of a main liquid crystal display and Fig. 2B shows a cross-sectional view of a sub liquid crystal display. In Figure 1, F indicates the light-emitting direction of the main display, and R indicates the light-emitting direction of the sub display. The portable phone 10 shown in Figure 1 has a foldable structure such that the display part shown in the upper part of the figure can be folded over the operation part shown in the lower part, and the display part has two built-in displays, i.e., the main liquid crystal display 14 constructed by sandwiching a liquid crystal between front and rear two glass plates and the sub liquid crystal display 15 having a similar structure. The portable phone 10 further includes a receiver 16 and a microphone 17.

The liquid crystal display apparatus 20 of the portable phone according to the prior art comprises a main front polarizer 201, a main liquid crystal 202, a main rear polarizer 203, a main rear reflector 204, a main front display backlight guide 205, a main front display light source 206 constructed from an LED, a main liquid crystal driver 207, a sub rear display backlight guide 215, a sub rear reflector 214, a sub rear polarizer 213, a sub liquid crystal 212, a sub front polarizer 211, a sub rear display light source 216, and a sub liquid crystal driver 217.

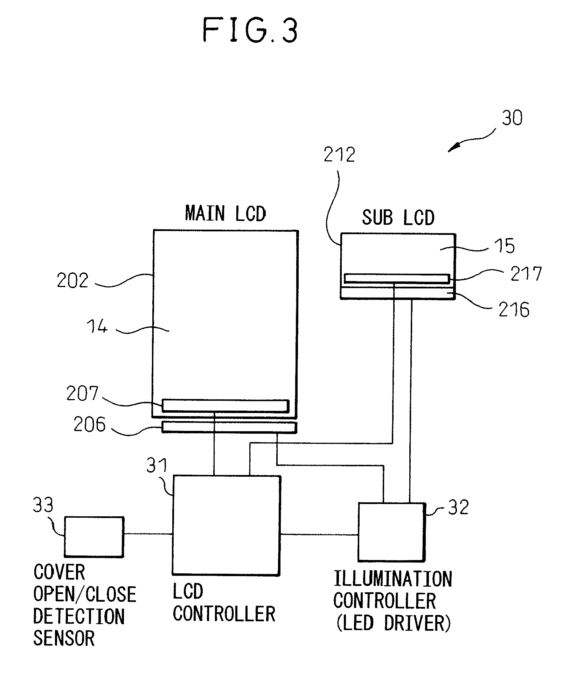

Figure 3 is a block diagram showing the circuit configuration of the portable phone according to the prior art. The portable phone 30 contains in its operation part a liquid crystal display controller 31 for controlling the main liquid crystal driver 207 of the main liquid crystal display 202 and the sub liquid crystal driver 217 of the sub liquid crystal display 212 and an illumination controller 32 for controlling the illumination of the front display light source 206 for the main display area 14 and the rear display light source 216 for the sub display area 15. The illumination controller 32 is connected to the liquid crystal display controller 31 so as to be able to communicate with each other. Each light source is constructed from an LED.
The operation part contains a cover open/close detection sensor 33 which is constructed, for example, from a magnetic sensor, and the display part contains a magnet in a position opposite of the magnetic sensor contained in the operation part. The cover open/close detection sensor 33 is connected to the liquid crystal display controller 31.

According to the prior art, the operation of the liquid crystal display and the display illumination of the portable phone are generally controlled in the following manner. When the cover open state is detected by the cover open/close detection sensor, the liquid crystal display controller 31 performs control to turn on the main display area 14 while turning off the sub display area 15, and when the cover is closed, it performs control to turn on the sub display area 15 while turning off the main display area 14.
When the cover open state is detected by the cover open/close detection sensor, the illumination controller 32 performs control to turn on the front display light source 206 for a predetermined length of time or turn it on during an operation being performed and keep it on for a predetermined length of time after completion of the operation, while turning off the rear display light source 216. On the other hand, when the cover is closed, the front display light source 206 is turned off, while turning on the rear display light source 216 for a predetermined length of time.
When the cover is closed, control is performed to turn on the rear display light source 216 upon arrival of an incoming call.
When the cover is open, control is performed to turn on the front display light source 206 upon arrival of an incoming call.

As shown in Figure 1, the prior art portable terminal has a foldable structure, and to display characters and image information, the display part of the portable terminal has a transmissive-type main liquid crystal panel on the front side and a transmissive-type sub liquid crystal panel on the rear side in a back-to-back arrangement, and information is displayed on the front and rear sides independently of each other. The portable terminal with the two liquid crystal panels mounted back-to-back in this manner becomes thicker than a portable terminal with a single liquid crystal panel, and this has been an obstacle in achieving a thin construction.

As a solution to this problem, a design has been realized in which the display part of a portable terminal is constructed with a single liquid crystal panel and the housing of the display part is rotated to switch from one display to the other. However, this design involves problems such as increased cost, increased complexity, and difficulty in achieving a sturdy construction. As another solution, patent document 1 discloses a portable terminal in which the display part of the portable terminal is constructed with a single liquid crystal panel and is designed so as to be viewable from both the front and rear sides, while maintaining the thinness of the construction.

The double-sided liquid crystal display apparatus used in the mobile communication terminal described in patent document 1 has a structure such that the display apparatus is partitioned between a first main display area and a second sub display area so that the single reflective-type liquid crystal panel can be viewed from both the front and rear sides thereof, wherein polarizers and reflectors are disposed symmetrically between the main display area and the sub display area. Then, as the folding cover is opened or closed, the opening or closing is detected and the display is switched from one area to the other to produce the display in the specified area. However, this liquid crystal display apparatus is limited to a reflective liquid crystal display of the type that uses a backlight.

[Patent document 1] Japanese Unexamined Patent Publication No. 2001-27756 (refer to claim 1, paragraphs [0023] to [0027], and Figure 3)

### SUMMARY OF THE INVENTION

The prior art has had the following disadvantages because two liquid crystal panels are combined as shown in the cross-sectional view of Figure 2.
(a) The construction of the entire display part becomes thick.
(b) The weight increases because many circuit parts and component parts are used.
(c) The cost increases because many circuit parts and component parts are used.
(d) The structure of the liquid crystal display becomes complex, and sufficient strength to protect the liquid crystal display cannot be provided.

Accordingly, it is an object of the present invention to provide a thin liquid crystal display apparatus that is constructed using a single transmissive-type liquid crystal panel and that is viewable from both the front and rear sides of the liquid crystal panel by arranging polarizers symmetrically while arranging a reflector in a partially asymmetrical fashion; it is another object of the invention to provide a portable phone equipped with such a liquid crystal display apparatus, achieving a thin and lightweight construction.

A liquid crystal display apparatus according to the present invention, which achieves the above object, comprises: a single transmissive-type liquid crystal panel having a display area partitioned between a first display area for producing a display on a front side and a second display area for producing a display on a rear side; a first illuminating unit for illuminating the first display area from the rear side; and a second illuminating unit for illuminating the second display area from the front side.

In the liquid crystal display apparatus, the first illuminating unit comprises a front display first backlight guide disposed on the rear side of the first display area of the liquid crystal panel and a first light source disposed adjacent to one end of the first backlight guide.

In the liquid crystal display apparatus, the second illuminating unit comprises a rear display second backlight guide disposed on the front side of the second display area of the liquid crystal panel and a second light source disposed adjacent to one end of the second backlight guide.

The liquid crystal display apparatus further comprises a liquid crystal driver, located on one side of the liquid crystal panel, for driving the liquid crystal panel to display information thereon, wherein the liquid crystal driver causes the first display area and the second display area to display information independently of each other.

In the liquid crystal display apparatus, the second display area is formed within an edge portion of the liquid crystal panel along a longer side thereof.
In the liquid crystal display apparatus, the second display area is formed within an edge portion of the liquid crystal panel along a shorter side thereof.
In the liquid crystal display apparatus, the second display area includes a plurality of display areas.

A portable phone according to the present invention, which achieves the above object, comprises a display part incorporating the above-described liquid crystal display apparatus and an operation part for operating the display part, the display part and the operation part being jointed together by a hinge in a foldable manner, wherein the second light source forming the second illuminating means is mounted inside a housing of the operation part at a position opposite the front side of the liquid crystal panel.

The portable phone further comprises a liquid crystal display controller provided within the operation part and connected to the liquid crystal driver contained in the display part, wherein the liquid crystal display controller controls the liquid crystal driver so that the first display area and the second display area display information independently of each other.

A portable phone according to the present invention, which achieves the above object, comprises a display part and an operation part for operating the display part, the display part and the operation part being jointed together by a hinge in a foldable manner and in such a manner so as to allow the display part to rotate at the hinge, wherein the above-described liquid crystal display apparatus is built into the display part.

The liquid crystal display apparatus of the present invention provides the main and sub display areas using a single liquid crystal panel and controls the display and illumination for each individual display area, thereby making the liquid crystal panel viewable from both the front and rear sides thereof, while offering the advantage that the thickness of the liquid crystal display apparatus can be reduced by one half compared with the prior art.
Since the sub display area only needs to display the communication and operation conditions with the portable phone folded up, the sub display area formed in an elongated shape can achieve a functional display without impairing the aesthetic design.
Furthermore, since the liquid crystal driver and the illumination-related component parts for the sub liquid crystal panel can be eliminated, the parts cost can be reduced correspondingly.
Moreover, the weight can be reduced by an amount equal to the weight of the sub liquid crystal panel.

### BRIEF DESCRIPTION OF THE DRAWINGS

Figure 1A is a front view showing a portable phone mounted with a liquid crystal display apparatus according to the prior art.
Figure 1B is a side view showing a portable phone mounted with a liquid crystal display apparatus according to the prior art.
Figure 1C is a rear view showing a portable phone mounted with a liquid crystal display apparatus according to the prior art.
Figure 2A is a cross-sectional view of a main liquid crystal display taken along line 11-11.
Figure 2B is a cross-sectional view of a sub liquid crystal display taken along line 11-11.
Figure 3 is a block diagram showing the circuit configuration of the portable phone according to the prior art.
Figure 4A is a front view showing a portable phone mounted with a liquid crystal display apparatus according to the present invention.
Figure 4B is a side view showing a portable phone mounted with a liquid crystal display apparatus according to the present invention.
Figure 4C is a rear view showing a portable phone mounted with a liquid crystal display apparatus according to the present invention.
Figure 5A is a cross-sectional view taken along line 41-41 in Figure 4, showing the structure of the liquid crystal display apparatus mounted in the portable phone according to a first embodiment.
Figure 5B is a cross-sectional view taken along line 41-41 in Figure 4, showing the structure of the liquid crystal display apparatus mounted in the portable phone according to a second embodiment.
Figure 6 is a block diagram showing the circuit configuration of the portable phone according to the present invention.
Figure 7A is a diagram showing a front view of a portable phone mounted with a liquid crystal display apparatus according to a third embodiment of the present invention.
Figure 7B is a diagram showing a rear view of a portable phone mounted with a liquid crystal display apparatus according to a third embodiment of the present invention.
Figure 8A is a diagram showing a front view of a portable phone mounted with a liquid crystal display apparatus according to a fourth embodiment of the present invention.
Figure 8B is a diagram showing a rear view of a portable phone mounted with a liquid crystal display apparatus according to a fourth embodiment of the present invention.
Figure 9A is a diagram showing a side view of a portable phone mounted with a liquid crystal display apparatus according to the prior art.
Figure 9B is a diagram showing a rear view of a portable phone mounted with a liquid crystal display apparatus according to the prior art, with the display part not rotated.
Figure 9C is a diagram showing a rear view of a portable phone mounted with a liquid crystal display apparatus according to the prior art, with the display part rotated.
Figure 10A is a diagram showing a side view of a portable phone mounted with a liquid crystal display apparatus according to a fifth embodiment of the present invention.
Figure 10B is a diagram showing a side view of a portable phone mounted with a liquid crystal display apparatus according to a fifth embodiment of the present invention, with the display part not rotated.
Figure 10C is a diagram showing a side view of a portable phone mounted with a liquid crystal display apparatus according to a fifth embodiment of the present invention, with the display part rotated.

### DESCRIPTION OF THE PREFERRED EMBODIMENTS

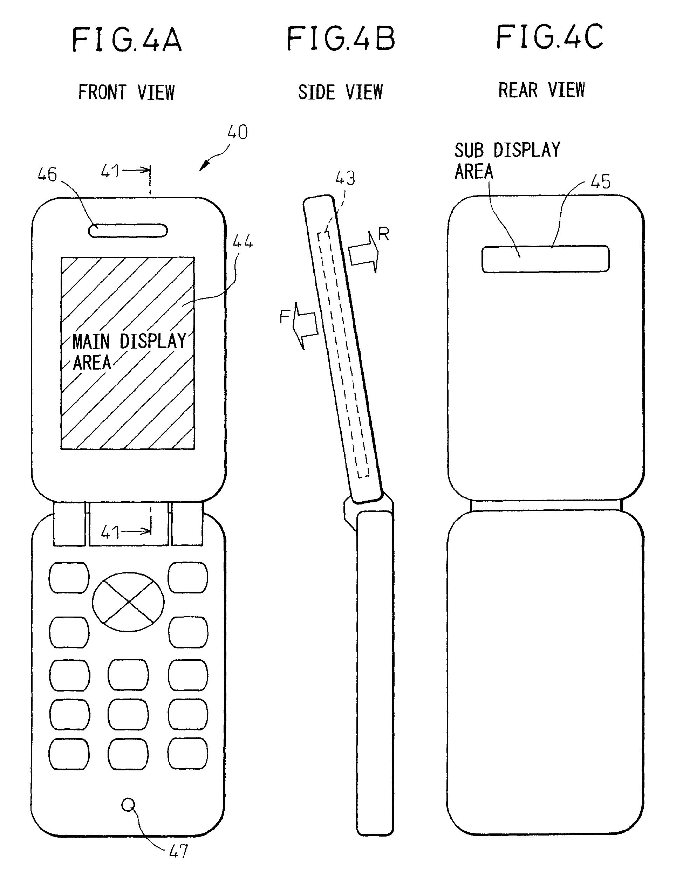

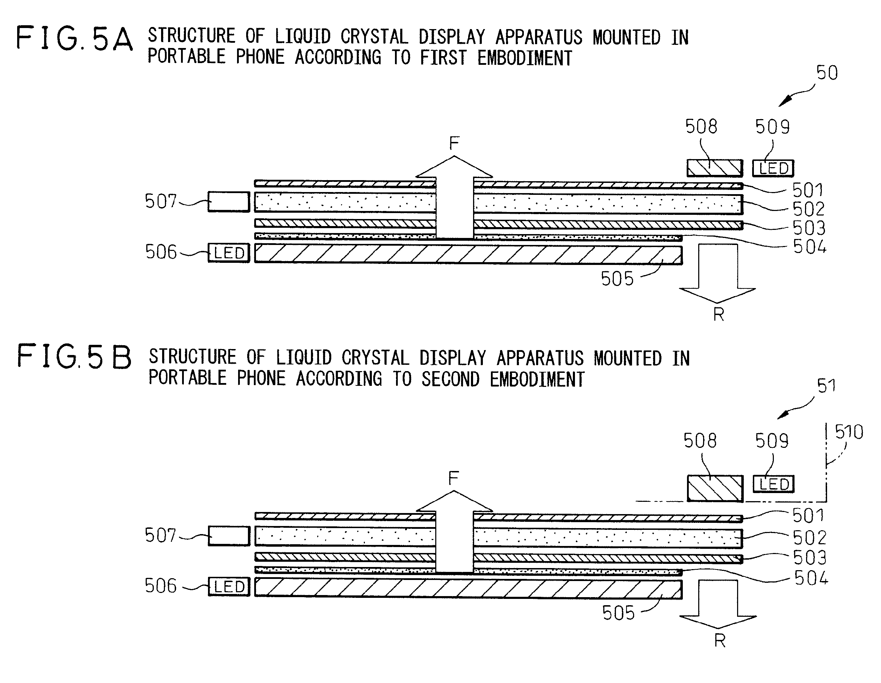

The embodiments of the present invention will be described below with reference to the accompanying drawings. Figure 4 (Figs. 4A to 4C) is a diagram showing a portable phone mounted with a liquid crystal display apparatus according to the present invention, in which Fig. 4A shows a front view, Fig. 4B shows a side view, and Fig. 4C shows a rear view. The portable phone 40 shown in Figure 4 has a foldable structure such that the display part shown in the upper part of the figure can be folded over the operation part shown in the lower part, and the display part contains a liquid crystal display apparatus 43 having a transmissive liquid crystal display panel constructed by sandwiching a liquid crystal between front and rear two glass plates. The liquid crystal display apparatus 43 is partitioned between a first main display area 44, which produces a display viewable through a front-side main display window indicated by F in Fig. 4B, and a second sub display area 45, which produces a display viewable through a rear-side sub display window indicated by R. The portable phone 40 further includes a receiver 46 and a microphone 47. According to the present invention, since the liquid crystal display apparatus 43 of the portable terminal 40, viewable from both the front and rear sides, can be constructed from a single liquid crystal panel, the thickness of the portable terminal 40 is reduced by one-half compared with the portable terminal incorporating the prior art liquid crystal display apparatus requiring two liquid crystal panels. Next, the first and second embodiments of the liquid crystal display apparatus 43 will be described below with reference to Figure 5.

Figure 5 is a cross-sectional view taken along line 41-41 in Figure 4: Fig. 5A shows the structure of the liquid crystal display apparatus mounted in the portable phone according to the first embodiment, and Fig. 5B shows the structure of the liquid crystal display apparatus mounted in the portable phone according to the second embodiment. In Figure 5, F indicates the light-emitting direction of the main display, and R indicates the light-emitting direction of the sub display. The liquid crystal display apparatus 50 of the portable phone according to the first embodiment comprises a front polarizer 501, a liquid crystal 502, a rear polarizer 503, a rear reflector 504, a front display backlight guide 505, a front display light source 506 constructed from an LED, a liquid crystal driver 507, a rear display backlight guide 508, and a rear display light source 509. To enhance the viewability of the main and sub displays, the front polarizer 501 and the rear polarizer 503 are arranged so as to cover the entire area of the liquid crystal 502, as in the prior art, but the rear reflector 504 is not disposed in the sub display area, but disposed only in the main display area.

The liquid crystal display apparatus 51 of the portable phone 40 according to the second embodiment comprises a front polarizer 501, a liquid crystal 502, a rear polarizer 503, a rear reflector 504, a front display backlight guide 505, a front display light source 506 constructed from an LED, and a liquid crystal driver 507. The rear display backlight guide 508 and the rear display light source 509 are mounted inside the housing of the operation part of the portable terminal so as to be positioned opposite the sub display area of the liquid crystal display apparatus 51.

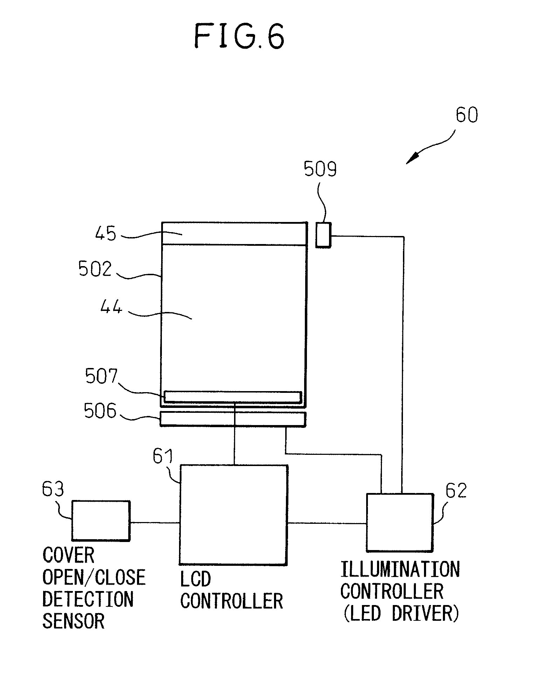

Figure 6 is a block diagram showing the circuit configuration of the portable phone according to the present invention. The portable phone 60 contains in its operation part a liquid crystal display controller 61 for controlling the liquid crystal driver 507 of the liquid crystal display apparatus 502 and an illumination controller 62 for controlling the illumination of the front display light source 506 for the main display area 44 and the rear display light source 509 for the sub display area 45. The illumination controller 62 is connected to the liquid crystal display controller 61 so as to be able to communicate with each other. Each light source is constructed from an LED. The operation part contains a cover open/close detection sensor 63, which is constructed, for example, from a magnetic sensor, and the display part contains a magnet in a position opposite the magnetic sensor contained in the operation part. The cover open/close detection sensor 63 is connected to the liquid crystal display controller 61.

The liquid crystal driver 507 is located on one side of the liquid crystal 502 and drives the liquid crystal 502 to display information. The liquid crystal driver 507 causes the first main display area 44 and the second sub display area 45 to display information independently of each other.

The liquid crystal display controller 61 is provided within the operation part and connected to the liquid crystal driver 507 contained in the display part. The liquid crystal display controller 61 controls the liquid crystal driver 507 so that the first main display area 44 and the second sub display area 45 display information independently of each other.

According to the present invention, the operation of the liquid crystal display and the display illumination of the portable phone are controlled in the following manner. The liquid crystal display controller 61 performs control based on a signal received from the cover open/close detection sensor 63, i.e., when it is determined that the cover is opened, the main display area 44 is turned on, and when it is determined that the cover is closed, the main display area 44 is turned off. On the other hand, when it is determined that the cover is closed, control is performed to turn off the main display area 44, while turning on the sub display area 45.

When the cover open state is detected by the cover open/close detection sensor, the illumination controller 62 performs control to turn on the front display light source 506 for a predetermined length of time or turn it on during an operation being performed and keep it on for a predetermined length of time after completion of the operation, while turning off the rear display light source 509. On the other hand, when the cover is closed, the front display light source 506 is turned off, while turning on the rear display light source 509 for a predetermined length of time.
When the cover is closed, control is performed to turn on the rear display light source 509 upon arrival of an incoming call.
When the cover is open, control is performed to turn on the front display light source 506 upon arrival of an incoming call.

Since the sub display area 45 is provided at a position far away from the liquid crystal driver 507 located on one side of the liquid crystal 502, illumination from the front display light source 506 for the main display area 44 can be efficiently used, and the main display area 44 and the sub display area 45 can be formed using minimum required space and without wasting space. Switching between the front display light source 506 for the front display backlight guide 505 and the rear display light source 509 for the rear display backlight guide 508 should be made synchronously with the switching of the display between the main display area 44 and the sub display area 45 of the liquid crystal 502.

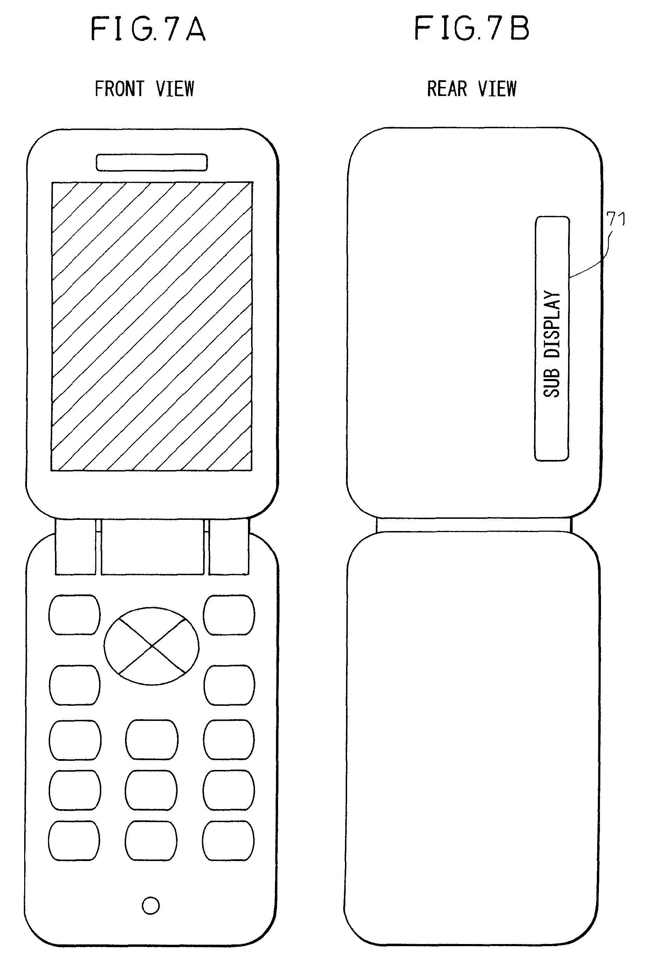

Figure 7 is a diagram showing a portable phone mounted with a liquid crystal display apparatus according to a third embodiment of the present invention, Fig. 7A showing a front view and Fig. 7B a rear view. In the example shown, only one sub display window is provided along a longitudinal side of the display part.

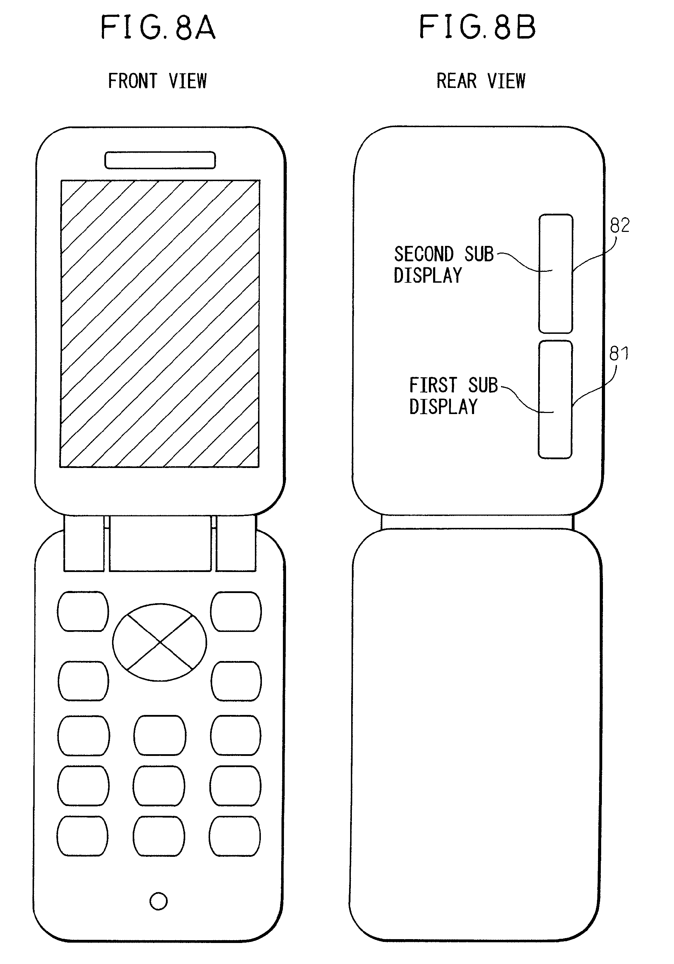

Figure 8 is a diagram showing a portable phone mounted with a liquid crystal display apparatus according to a fourth embodiment of the present invention, Fig. 8A showing a front view and Fig. 8B a rear view. In the example shown, two sub display windows are provided along one longitudinal side of the display part. For example, a digital clock is displayed in the first sub display window, and a mark showing the remaining battery capacity is displayed in the second sub display window.

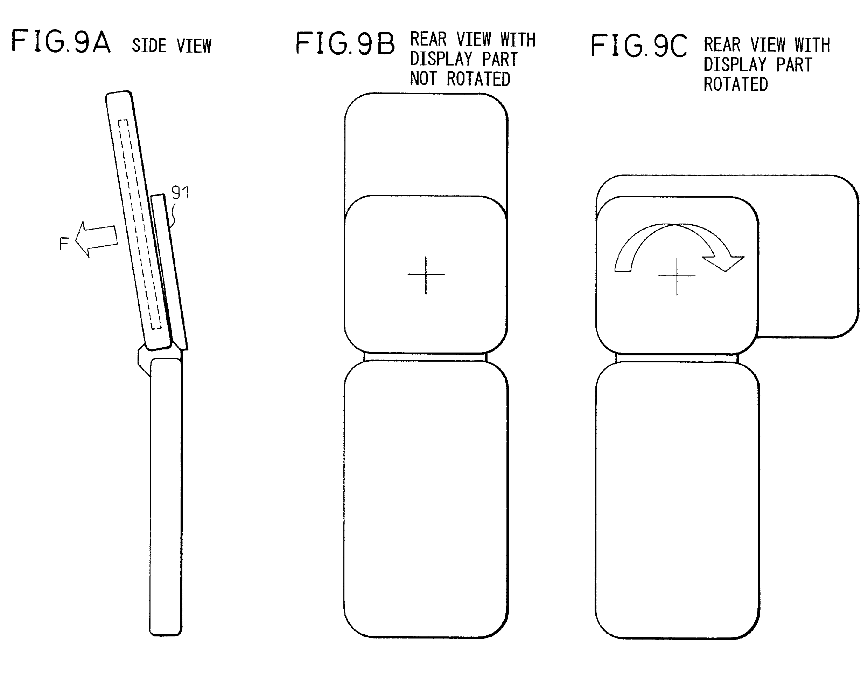

Figure 9 is a diagram showing a portable phone mounted with a liquid crystal display apparatus according to the prior art, Fig. 9A showing a side view, Fig. 9B a rear view with the display part not rotated, and Fig. 9C a rear view with the display part rotated. In the case of the portable phone having a rotating mechanism 91 such as shown in Figure 9, if two liquid crystal displays are provided as shown in Figure 1, the display viewable from the rear side cannot be presented as the sub liquid crystal display 15 is hidden behind the rotating mechanism 15.

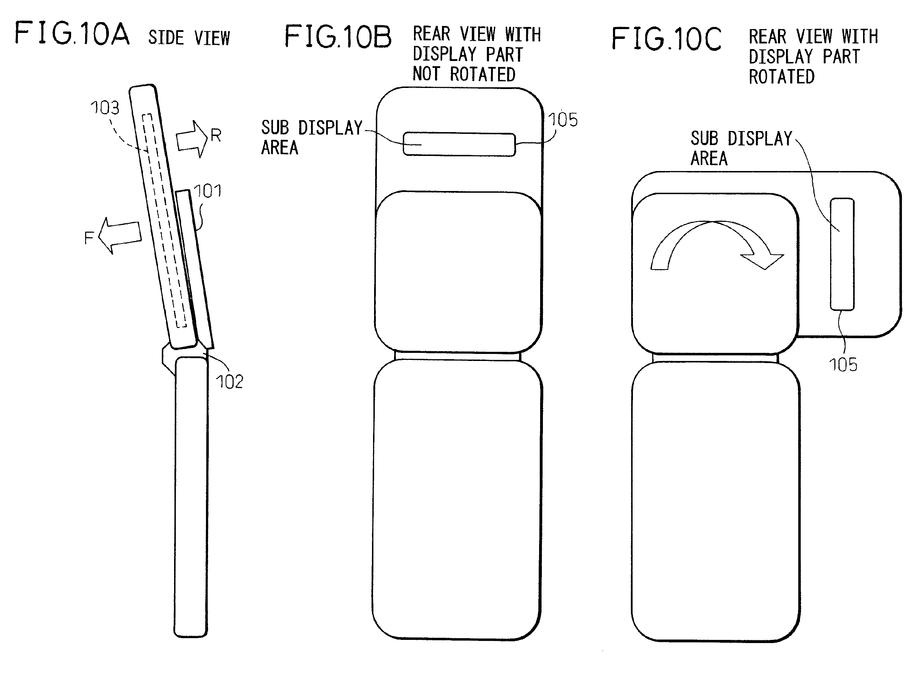

Figure 10 is a diagram showing a portable phone mounted with a liquid crystal display apparatus according to a fifth embodiment of the present invention, Fig. 10A showing a side view, Fig. 10B a rear view with the display part not rotated, and Fig. 10C a rear view with the display part rotated. In the portable phone 100 shown in Figure 10, the display part incorporating the liquid crystal display apparatus 103 and the operation part for operating the display part are joined together by a hinge 102 in a foldable manner and in such a manner as to allow the display part to rotate at the hinge 102. In the portable phone 100 according to the present invention, unlike the prior art portable phone shown in Figure 9, the sub display area 105 is viewable from the rear side, since it is located at a position not hidden behind the rotating mechanism 101, as shown in Figure 10.

## Claims

1. A liquid crystal display apparatus comprising:
a single transmissive-type liquid crystal panel having a display area partitioned between a first display area for producing a display on a front side and a second display area for producing a display on a rear side;
a first illuminating unit for illuminating the first display area from the rear side; and
a second illuminating unit for illuminating the second display area from the front side.

2. A liquid crystal display apparatus as claimed in claim 1, wherein the first illuminating unit comprises a front display first backlight guide disposed on the rear side of the first display area of the liquid crystal panel and a first light source disposed adjacent to one end of the first backlight guide.

3. A liquid crystal display apparatus as claimed in claim 1, wherein the second illuminating unit comprises a rear display second backlight guide disposed on the front side of the second display area of the liquid crystal panel and a second light source disposed adjacent to one end of the second backlight guide.

4. A liquid crystal display apparatus as claimed in claim 1, further comprising a liquid crystal driver, located on one side of the liquid crystal panel, for driving the liquid crystal panel to display information thereon, wherein
the liquid crystal driver causes the first display area and the second display area to display information independently of each other.

5. A liquid crystal display apparatus as claimed in claim 1, wherein the second display area is formed within an edge portion of the liquid crystal panel along a longer side thereof.

6. A liquid crystal display apparatus as claimed in claim 1, wherein the second display area is formed within an edge portion of the liquid crystal panel along a shorter side thereof.

7. A liquid crystal display apparatus as claimed in claim 1, wherein the second display area includes a plurality of display areas.

8. A portable phone comprising a display part incorporating the liquid crystal display apparatus as claimed in claim 1 and an operation part for operating the display part, the display part and the operation part being jointed together by a hinge in a foldable manner, wherein
the second light source forming the second illuminating means is mounted inside a housing of the operation part at a position opposite the front side of the liquid crystal panel.

9. A portable phone as claimed in claim 8, further comprising a liquid crystal display controller provided within the operation part and connected to the liquid crystal driver contained in the display part, wherein
the liquid crystal display controller controls the liquid crystal driver so that the first display area and the second display area display information independently of each other.

10. A portable phone comprising a display part and an operation part for operating the display part, the display part and the operation part being jointed together by a hinge in a foldable manner and in such a manner as to allow the display part to rotate at the hinge, wherein
the liquid crystal display apparatus as claimed in claim 1 is built into the display part.
